# EUROPÄISCHE PATENTSCHRIFT

(11) **EP 4 118 731 B1**
(45) Veröffentlichungstag und Bekanntmachung des Hinweises auf die Patenterteilung: **03.09.2025**
(21) Anmeldenummer: 21725395.4
(22) Anmeldetag: 22.04.2021
(51) Int. Cl.: H02K 1/14, H02K 5/02, H02K 15/02, C23C 24/08

(54) **VERFAHREN ZUM HERSTELLEN EINER ELEKTRISCHEN MASCHINE**
METHOD FOR MANUFACTURING OF AN ELECTRICAL MACHINE
PROCEDE DE FABRICATION D'UNE MACHINE ELECTRIQUE

(30) Priorität: 30.04.2020 DE 102020205504
(43) Veröffentlichungstag der Anmeldung: 18.01.2023
(73) Patentinhaber: Siemens Mobility GmbH, 81739 München (DE)
(72) Erfinder: KÖRNER, Olaf, 90469 Nürnberg (DE); OUDE KOTTE, Freerk Jacobus, 90547 Stein (DE)
(74) Vertreter: Siemens Patent Attorneys
(86) Internationale Anmeldenummer: PCT/EP2021/060489
(87) Internationale Veröffentlichungsnummer: WO 2021/219476

(56) Entgegenhaltungen:
- DE-A1- 102016 203 945
- DE-A1- 102018 120 235

## Beschreibung

Die Erfindung bezieht sich auf ein Verfahren zum Herstellen einer elektrischen Maschine, bei dem unter anderem Statorringsegmente unter Bildung eines Statorringes aneinandergesetzt und anschließend miteinander verbunden werden.

Bei Verfahren der beschriebenen Art besteht das Problem, dass zwischen den tangential aneinandergrenzenden Statorringsegmenten Luftspalte auftreten können, die den magnetischen Widerstand zwischen den Statorringsegmenten erhöhen würden.

Aus der Offenlegungsschrift DE 10 2018 120 235 A1 ist ein Verfahren zum Herstellen eines Stators für eine elektrische Maschine aus Statorsegmenten bekannt, wobei die Statorsegmente in einer Presse hohlzylinderförmig verpresst werden und in einem erhitzten Gehäuse angeordnet werden.

Die Offenlegungsschrift DE 10 2016 203 945 A1 zeigt eine Statoreinrichtung für eine elektrische Maschine und ein Verfahren zu deren Herstellung. Die Statoreinrichtung der elektrischen Maschine besteht aus einem Blechpaket, wobei auf Zähnen Statorwicklungen untergebracht werden können. Außerdem ist ein Mantelbauteil vorgesehen, welches beispielsweise einen Teil des Gehäuses der elektrischen Maschine darstellen kann. Auf einer Mantelfläche des Blechpakets ist eine Schicht aufgebracht, welche unter anderem Kühlkanäle ausbilden kann. Außerdem stellt die Oberfläche der Schicht eine leicht zu bearbeitende Fügefläche zur Verfügung, damit das beschichtete Blechpaket in das Mantelbauteil beispielsweise durch eine Pressverbindung eingesetzt werden kann. Die Schicht kann vorzugsweise durch Kaltgasspritzen hergestellt werden.

Der Erfindung liegt die Aufgabe zugrunde, ein Verfahren der beschriebenen Art dahingehend zu verbessern, dass ein möglichst inniger Kontakt zwischen aneinander liegenden Statorringsegmenten gewährleistet wird und der magnetische Widerstand zwischen benachbarten Statorringsegmenten möglichst klein ist.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass nach dem Bilden des Statorrings mittels einer Presseinrichtung eine radial nach innen wirkende Presskraft erzeugt wird, durch die die Statorringsegmente tangential aufeinandergepresst werden, und im aufeinandergepressten Zustand auf radial außenliegende Außenflächen der Statorringsegmente eine äußere Beschichtung aufgebracht wird, die auf dem Statorring eine geschlossene äußere Mantelschicht bildet.

Ein wesentlicher Vorteil des erfindungsgemäßen Verfahrens besteht darin, dass durch das Aufbringen der äußeren Mantelschicht auf dem Statorring - im aufeinandergepressten Zustand der Statorringsegmente - erreicht werden kann, dass auch nach Abschluss des Herstellungsverfahrens die Statorringsegmente radial zusammengepresst bleiben und somit eine tangential wirkende Presskraft auf die Statorringsegmente erhalten bleibt, wodurch wiederum der magnetische Widerstand zwischen benachbarten Statorringsegmenten minimiert wird.

Erfindungsgemäß wird nach dem Aufbringen der äußeren Beschichtung das Erzeugen der Presskraft mittels der Presseinrichtung beendet und die während des Beschichtens mittels der Presseinrichtung erzeugte Presskraft anschließend ganz oder zumindest zum überwiegenden Teil von der äußeren Mantelschicht aufrechterhalten, wobei die Statorringsegmente durch die geschlossene äußere Mantelschicht tangential aufeinandergepresst bleiben.

Die äußere Beschichtung wird erfindungsgemäß durch Kaltgasspritzen ("Cold-Spray"), Flammspritzen, ein thermisches Spritzverfahren für metallische Werkstoffe oder durch Auftragsschweißen hergestellt.

Bezüglich möglicher Ausgestaltungen des Kaltgasspritzens bzw. Herstellens von Kaltgasspritzschichten sei auf die Literatur verwiesen, beispielsweise auf "Review on Cold Spray Process and Technology Part I - Intellectual Property" (Irissou et al., Journal of Thermal Spray Technology, 17, 4, pp. 495-516, 2008).

Die äußere Mantelschicht des Stators ist bevorzugt eine Metallschicht, insbesondere eine Stahlschicht.

Der Elastizitätskoeffizient des Schichtmaterials der Mantelschicht entspricht vorzugsweise zumindest näherungsweise dem Elastizitätskoeffizienten eines Gehäuses der elektrischen Maschine, in das der Stator eingesetzt, vorzugsweise eingeschrumpft wird, mit einer Abweichung von vorzugsweise maximal ± 60 %.

Falls die äußere Mantelschicht aus Stahl mit einem E-Modul von 210 GPa besteht, kann das Gehäuse beispielsweise aus globularem Grauguss mit einem E-Modul von ca. 130 GPa bestehen.

Nach dem Aufbringen der äußeren Beschichtung wird der beschichtete Statorring vorzugsweise mittels einer Drehmaschine überdreht, wobei der Durchmesser des beschichteten Statorrings auf einen vorgegebenen Solldurchmesser gebracht und/ oder die Oberfläche der äußeren Beschichtung geglättet wird.

Der beschichtete Statorring wird vorzugsweise in ein Gehäuse der Maschine eingeschrumpft, wobei die äußere Beschichtung des beschichteten Statorrings an die Innenwand des Gehäuses gepresst wird.

In zumindest eines der Statorringsegmente, vorzugsweise in alle Statorringsegmente, wird vorzugsweise jeweils eine Hilfseinrichtung integriert. Mit der Presseinrichtung wird auf die Hilfseinrichtungen vorzugsweise jeweils eine Druck- oder Zugkraft in radialer Richtung ausgeübt, die die Presskraft bildet oder zumindest zu dieser beiträgt.

Vorteilhaft ist es, wenn zumindest eine der Hilfseinrichtungen eine Schiene ist, die sich in axialer Richtung durch ihr zugeordnetes Statorringsegment hindurch oder an diesem entlang erstreckt und an den axialen Enden ihres Statorringsegments mit axialen Endabschnitten herausragt und mit der Presseinrichtung eine Druck- oder Zugkraft in radialer Richtung auf die axialen Endabschnitte ausgeübt wird, die die Presskraft bildet oder zumindest zu dieser beiträgt.

Nach dem Aufbringen der äußeren Beschichtung werden die herausstehenden axialen Endabschnitte vorzugsweise gekürzt oder vollständig abgetrennt.

Auch ist es vorteilhaft, wenn zumindest eines der Statorringsegmente, vorzugsweise alle Statorringsegmente, jeweils ein radial innenliegendes Formschlusselement aufweisen, an das oder die Formschlusselemente jeweils ein Zugelement angebracht wird und mit der Presseinrichtung auf die Formschlusselemente eine Zugkraft radial nach innen ausgeübt wird, die die Presskraft bildet oder zumindest zu dieser beiträgt.

Bezüglich der Statorringsegmente wird es als vorteilhaft angesehen, wenn zur Herstellung zumindest eines der, vorzugsweise jedes der, Statorringsegmente eine Vielzahl an Statorringsegmentblechen aufeinandergelegt und zusammengepresst wird, radial außenliegende Stirnflächen der zusammengepressten Statorringsegmentbleche mit einer segmenteigenen Schicht beschichtet werden, die eine radial außenliegende Segmentmantelschicht des jeweiligen Statorringsegments bildet, und mit dem oder den beschichteten Statorringsegmenten der Statorring gebildet wird.

Das Zusammenpressen der Statorringsegmentbleche wird nach dem Aufbringen der segmenteigenen Segmentmantelschicht vorzugsweise beendet.

Von Vorteil ist es, wenn die segmenteigene Segmentmantelschicht die mechanische Kraft, die während des Aufbringens der segmenteigenen Segmentmantelschicht zum Zusammenpressen der Statorringsegmentbleche ausgeübt wurde, anschließend ganz oder zumindest zum überwiegenden Teil (vorzugsweise mindestens 50%) aufrechterhält.

Die segmenteigenen Segmentmantelschichten der Statorringsegmente werden vorzugsweise durch Kaltgasspritzen, Flammspritzen, ein thermisches Spritzverfahren für metallische Werkstoffe und/oder Auftragsschweißen hergestellt.

Nach dem Zusammensetzen der beschichteten Statorringsegmente wird die äußere Beschichtung vorzugsweise auf den segmenteigenen Segmentmantelschichten der Statorringsegmente aufgebracht, sodass die geschlossene äußere Mantelschicht des Statorrings auf den segmenteigenen Segmentmantelschichten der Statorringsegmente aufliegt.

Die äußere Beschichtung bzw. die statorseitige Mantelschicht und/oder zumindest eine der segmenteigenen Segmentmantelschichten, vorzugsweise alle, sind vorzugsweise Metallschichten, insbesondere Stahlschichten. Die Elastizitätskoeffizienten weichen vorzugsweise maximal ± 60 % von dem Elastizitätskoeffizienten des Gehäuses der elektrischen Maschine ab.

Der Statorring ist vorzugsweise zumindest abschnittsweise zylindrisch und weist dort eine Mantelschicht mit einem kreiszylindrischen Querschnitt auf.

Die Erfindung bezieht sich außerdem auf eine elektrische Maschine mit Statorringsegmenten, die unter Bildung eines Statorrings aneinandergesetzt und miteinander verbunden sind.

Erfindungsgemäß ist bezüglich der Maschine vorgesehen, dass die Statorringsegmente tangential aufeinandergepresst sind, nämlich durch eine auf die Außenflächen der Statorringsegmente durch Kaltgasspritzen, Flammspritzen, ein thermisches Spritzverfahren für metallische Werkstoffe oder durch Auftragsschweißen aufgebrachte äußere Beschichtung, die auf dem Statorring eine geschlossene äußere Mantelschicht bildet.

Bezüglich der Vorteile der erfindungsgemäßen elektrischen Maschine und deren vorteilhafter Ausgestaltungen sei auf die obigen Ausführungen im Zusammenhang mit dem erfindungsgemäßen Verfahren und dessen vorteilhafter Ausgestaltungen verwiesen.

Vorteilhaft ist es, wenn die Statorringsegmente jeweils eine Vielzahl an aufeinander gepressten Statorringsegmentblechen aufweisen, die auf ihren radial außenliegenden Stirnflächen mit einer segmenteigenen Segmentmantelschicht beschichtet sind, und die geschlossene äußere Mantelschicht des Statorrings auf den segmenteigenen Segmentmantelschichten der Statorringsegmente aufliegt.

Die segmenteigenen Segmentmantelschichten halten vorzugsweise jeweils - bezogen auf die Drehachse der Maschine - in axialer Richtung eine mechanische Kraft, die während des Aufbringens der segmenteigenen Segmentmantelschichten zum Zusammenpressen der Statorringsegmentbleche ausgeübt wurde, ganz oder zumindest zum überwiegenden Teil (vorzugsweise mindestens 50%) aufrecht.

Die Erfindung bezieht sich außerdem auf ein Verfahren zum Herstellen einer elektrischen Maschine, bei dem unter anderem Statorbleche, insbesondere Statorringsegmentbleche, mittels einer Presseinrichtung aufeinandergepresst und anschließend miteinander verbunden werden. Erfindungsgemäß ist bezüglich dieses letztgenannten erfindungsgemäßen Verfahrens vorgesehen, dass im aufeinandergepressten Zustand eine äußere Beschichtung aufgebracht wird, nach dem Aufbringen der äußeren Beschichtung das Erzeugen der Presskraft mittels der Presseinrichtung beendet wird und die während des Beschichtens mittels der Presseinrichtung erzeugte Presskraft anschließend ganz oder zumindest zum überwiegenden Teil (vorzugsweise mindestens 50%) von der äußeren Beschichtung aufrechterhalten wird.

Bezüglich der Vorteile des letztgenannten erfindungsgemäßen Verfahrens gelten die obigen Ausführungen im Zusammenhang mit den oben beschriebenen Beschichtungen entsprechend.

Die äußere Beschichtung kann eine äußere Mantelschicht des Stators bilden. Alternativ kann die äußere Beschichtung eine segmenteigene Segmentmantelschicht eines Statorsegments bilden.

Die Statorbleche können ringförmig sein und im aufeinandergepressten Zustand bereits einen geschlossenen Statorring bilden; die äußere Beschichtung bildet in diesem Fall vorzugsweise eine äußere Mantelschicht des Stators.

Alternativ können die Statorbleche Statorringsegmentbleche sein, die im aufeinandergepressten Zustand ein Statorringsegment bilden, wobei die radial außenliegende Stirnflächen der zusammengepressten Statorringsegmentbleche mit der äußeren Beschichtung beschichtet werden, die eine radial außenliegende Segmentmantelschicht des Statorringsegments bildet. Mit einer Vielzahl solcher beschichteter Statorringsegmente lässt sich dann der Statorring bilden.

Ein aus einer Vielzahl beschichteter Statorringsegmente gebildeter Statorring kann nachfolgend ein zweites Mal beschichtet werden, wobei die zweite äußere Beschichtung dann eine äußere Mantelschicht des Stators bildet.

Die Erfindung wird nachfolgend anhand von Ausführungsbeispielen näher erläutert; dabei zeigen beispielhaft:
- Figur 1: in einer Draufsicht in axialer Richtung ein Ausführungsbeispiel für ein Statorringsegment, das zur Bildung eines Stators für eine elektrische Maschine verwendet werden kann,
- Figur 2: in einer Draufsicht in axialer Richtung einen Statorring, der aus den in Figur 1 gezeigten Statorringsegmenten gebildet worden ist,
- Figur 3: in einer Draufsicht in axialer Richtung den resultierenden Stator nach dem Aufbringen einer äußeren Mantelschicht auf dem Statorring gemäß Figur 2,
- Figur 4: den resultierenden Stator gemäß Figur 3 in einem Längsschnitt entlang der axialen Richtung bzw. entlang der Mittenachse des Stators, die die Drehachse der elektrischen Maschine bildet,
- Figur 5: den Stator gemäß Figur 4 bei der Nachbearbeitung der äußeren Mantelschicht,
- Figur 6: in einer dreidimensionalen Sicht schräg von der Seite ein weiteres Ausführungsbeispiel für ein Statorringsegment, das zur Bildung eines Stators für eine elektrische Maschine verwendet werden kann,
- Figur 7: in einer Draufsicht in axialer Richtung einen Stator, der aus den in Figur 6 gezeigten Stator- ringsegmenten gebildet und mit einer Mantelschicht versehen worden ist,
- Figur 8: den Stator gemäß Figur 7 in einem Längsschnitt entlang der axialen Richtung bzw. entlang der Mittenachse des Stators,
- Figur 9: den Stator gemäß Figur 7 in einem Längsschnitt entlang der axialen Richtung bzw. entlang der Mittenachse des Stators, nachdem axial überstehende Schienenabschnitte abgetrennt worden sind,
- Figur 10: in einer dreidimensionalen Sicht schräg von der Seite das Statorringsegment gemäß Figur 6 mit einem Greifwerkzeug zur Erzeugung einer Zugspannung,
- Fig. 11-12: vorteilhafte Verfahrensschritte beim Herstellen von Statorringsegmenten, nämlich das stirnkantenseitige Beschichten von zusammengepressten Statorringsegmentblechen mittels Kaltgasspritzen zur Bildung einer die Pressspannung haltenden segmenteigenen Schicht,
- Figur 13: in einer Draufsicht in axialer Richtung einen Stator, der aus den in Figur 11 gezeigten Statorringsegmenten, die jeweils mit einer die Pressspannung haltenden segmenteigenen Segmentmantelschicht versehen worden sind, gebildet sowie mit einer Mantelschicht auf den segmenteigenen Schichten versehen worden ist, und
- Figur 14: in einem Querschnitt Bestandteile eines Ausführungsbeispiels für eine elektrische Maschine, die mit einem Stator, wie er beispielhaft im Zusammenhang mit den Figuren 1 bis 13 erläutert worden ist, ausgestattet ist.

In den Figuren werden der Übersicht halber für identische oder vergleichbare Komponenten stets dieselben Bezugszeichen verwendet.

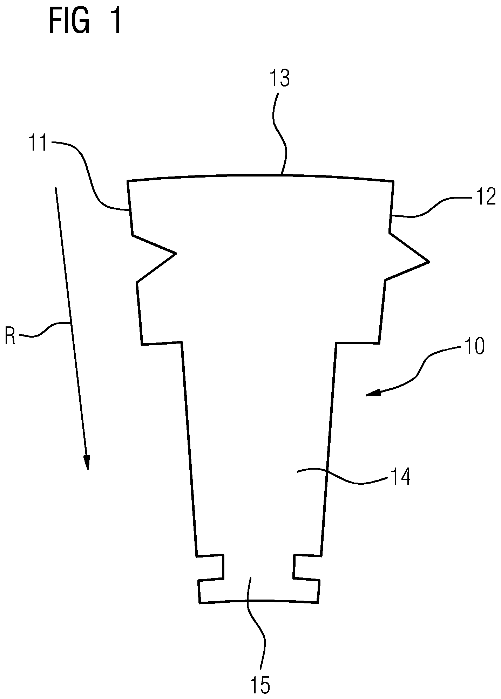

Die Figur 1 zeigt ein Ausführungsbeispiel für ein Statorringsegment 10, das zur Bildung eines Statorringes für eine elektrische Maschine verwendet werden kann. Das Statorringsegment 10 gemäß Figur 1 weist in seinem radial außenliegenden Bereich eine in der Figur 1 linke Kontaktfläche 11 und eine in der Figur 1 rechte Kontaktfläche 12 auf. Wird das Statorringsegment 10 zum Bilden des Statorringes mit anderen, in der Figur 1 nicht gezeigten, baugleichen Statorringsegmenten 10 zusammengesetzt, so grenzt jeweils die linke Kontaktfläche 11 eines jeden Statorringsegments 10 an eine rechte Kontaktfläche 12 eines benachbarten Statorringsegments 10 und jeweils die rechte Kontaktfläche 12 an eine linke Kontaktfläche 11 eines anderen benachbarten Statorringsegments 10.

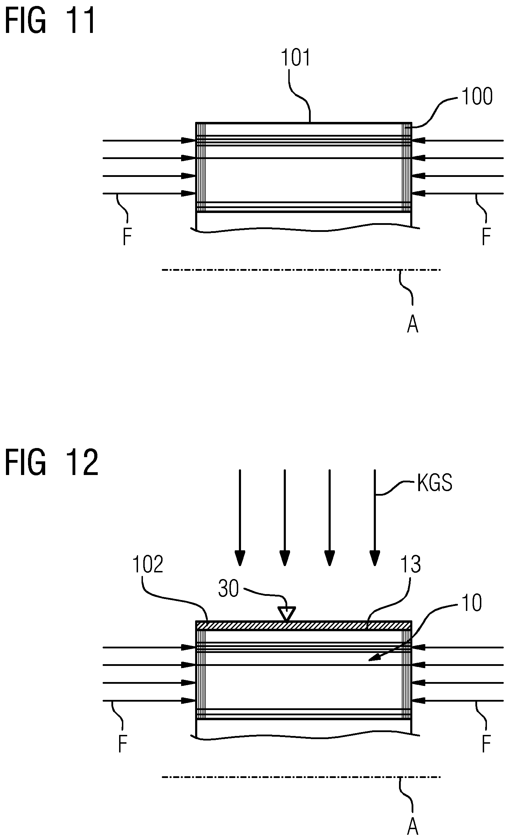

Eine radial außenliegende Außenfläche 13 des Statorringsegments 10 wird vorzugsweise durch eine Segmentmantelschicht gebildet, die weiter unten, insbesondere im Zusammenhang mit den Figuren 11 und 12 noch näher im Detail erläutert werden wird.

Auf dem radial innenliegenden Bereich 14 des Statorringsegments 10 wird durch Aufwickeln oder Aufschieben eine in der Figur 1 nicht gezeigte Spule montiert, sei es vor dem Zusammensetzen des Statorrings oder danach.

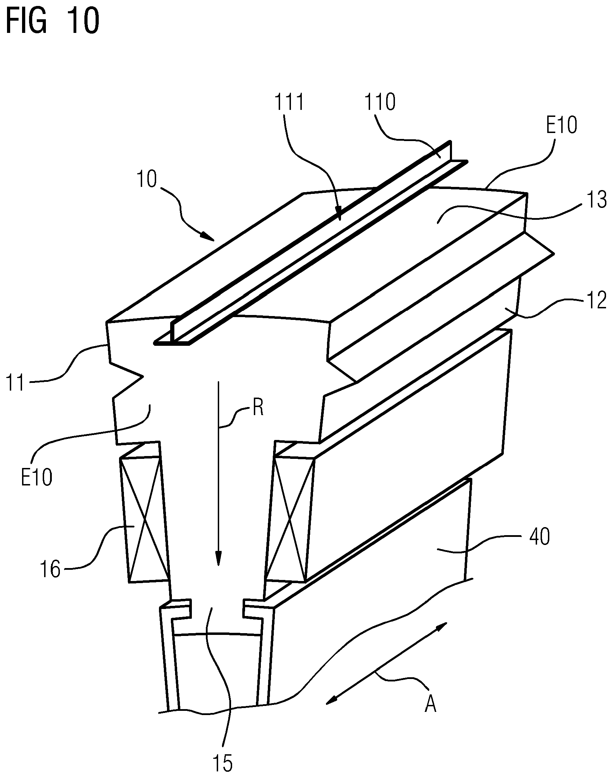

Bei dem Ausführungsbeispiel gemäß Figur 1 weist das Statorringsegment 10 im radial innenliegenden Bereich einen Formschlussabschnitt 15 auf, der das Zusammenwirken mit einem nicht gezeigten Greifwerkzeug ermöglicht. Mit einem solchen Greifwerkzeug kann nach dem Aneinandersetzen einer Vielzahl an Statorringsegmenten 10 bzw. nach dem Zusammensetzen des Statorringes eine Zugkraft in radialer Richtung R, und zwar radial nach innen, erzeugt werden. Ein Ausführungsbeispiel für ein Greifwerkzeug wird weiter unten im Zusammenhang mit der Figur 10 beispielhaft näher erläutert.

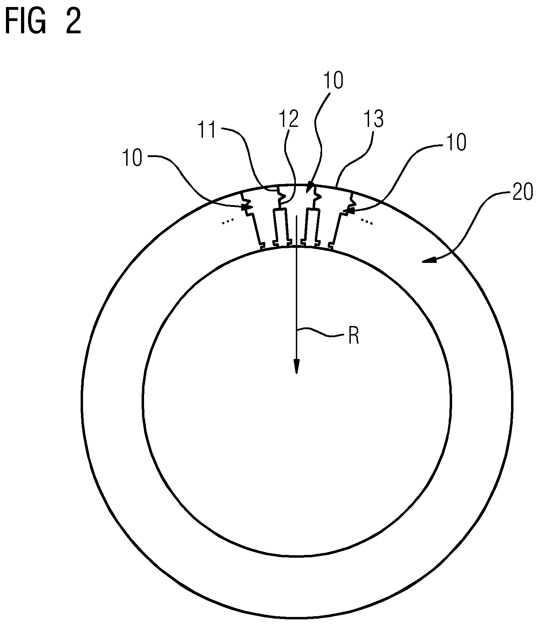

Die Figur 2 zeigt eine Vielzahl an Statorringsegmenten 10 gemäß Figur 1, nachdem diese unter Bildung eines Statorringes 20, nachfolgend auch kurz Stator 20 genannt, aneinandergesetzt bzw. zusammengesetzt worden sind. Es lässt sich erkennen, dass bei jedem Statorringsegment 10 jeweils die linke Kontaktfläche 11 an eine rechte Kontaktfläche 12 eines benachbarten Statorringsegments 10 und eine rechte Kontaktfläche 12 an eine linke Kontaktfläche 11 des jeweils anderen benachbarten Statorringsegments 10 grenzt. Die Außenflächen 13 der Statorringsegmente 10 bilden eine Außenfläche des in der Figur 2 noch unbeschichteten Stators 20.

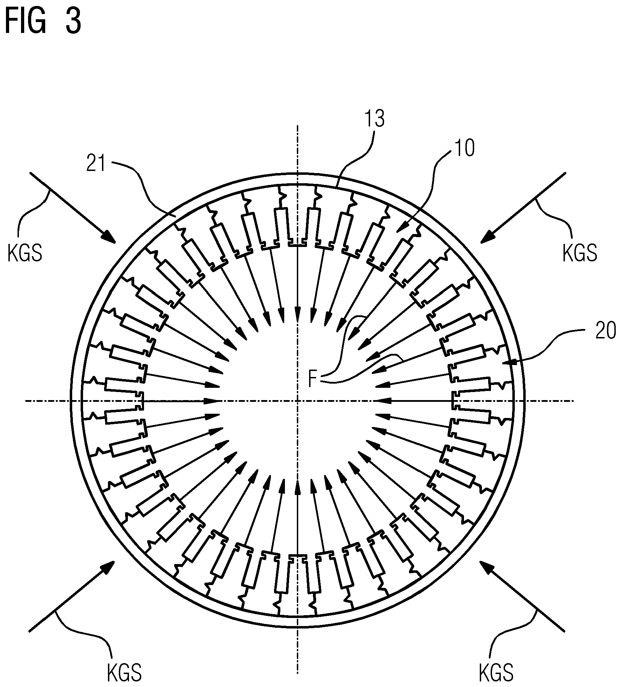

Um zu gewährleisten, dass zwischen den Kontaktflächen 11 und 12 der benachbarten Statorringsegmente 10 kein Luftspalt verbleibt, der den magnetischen Fluss zwischen den Statorringsegmenten 10 behindern bzw. den magnetischen Widerstand zwischen den Statorringsegmenten 10 erhöhen würde, wird auf die Statorringsegmente 10 eine Presskraft F ausgeübt, wie in der Figur 3 gezeigt ist. Die Presskraft F drückt oder zieht die Statorringsegmente 10 entlang der radialen Richtung R gemäß Figur 2 radial nach innen. Durch diese Presskraft F werden die Kontaktflächen 11 und 12 benachbarter Statorringsegmente tangential aufeinander gepresst. Ein Luftspalt zwischen den Kontaktflächen 11 und 12 wird somit bei Anliegen der Presskraft F minimiert.

Um die Presskraft F dauerhaft aufrechtzuerhalten, wird auf die radial außenliegenden Außenflächen 13 der Statorringsegmente 10 eine äußere Beschichtung aufgebracht, die auf dem Statorring 20 eine geschlossene äußere Mantelschicht 21 bildet.

Das Material und die Schichtdicke dieser Mantelschicht 21 ist derart gewählt, dass nach dem Aufbringen der Mantelschicht 21 die Presskraft F nicht mehr von außen aufgebracht werden muss, sondern anschließend ganz oder zumindest zum überwiegenden Teil (vorzugsweise mindestens 50%) von der äußeren Mantelschicht 21 aufrechterhalten wird. Durch die äußere Mantelschicht 21 bleiben die Statorringsegmente 10 somit tangential aufeinandergepresst.

Besonders vorteilhaft ist es, wenn das Aufbringen der äußeren Mantelschicht 21 mittels Kaltgasspritzen erfolgt, das in der Figur 3 durch Pfeile mit dem Bezugszeichen KGS schematisch angedeutet ist.

Beim Kaltgasspritzen wird ein Prozessgas, vorzugsweise Stickstoff oder Helium, bei einem Druck beispielsweise im Bereich von ca. 50 bar, in einer Spritzpistole auf einige hundert Grad (vorzugsweise bis maximal ca. 1.100 Grad) aufgeheizt. Anschließend expandiert das Prozessgas in einer Lavaldüse der Spritzpistole auf Überschallgeschwindigkeit. In den Prozessgasstrahl wird Pulvermaterial, das die spätere Mantelschicht 21 bilden soll, injiziert.

Das Pulvermaterial bzw. die injizierten Partikel werden durch das Prozessgas auf Überschallgeschwindigkeit beschleunigt und schlagen mit Geschwindigkeiten von vorzugsweise bis 1.200 m/s auf die außenliegenden Außenflächen 13 der Statorringsegmente 10 auf und bilden dort beim Aufprall die Beschichtung in Form einer dichten, fest haftenden und sauerstoff- bzw. oxidarmen Schicht. Die Statorringsegmente 10 werden dabei in der Regel nicht wärmer als 100 °C, sodass deren thermische Belastung während des Beschichtens minimal ist.

Als Pulvermaterial wird vorzugsweise Stahl verwendet, vorzugsweise der Spezifikation H13, M3, 304, 316L, 430L, A286, M152, S420 oder 8620. Alternativ oder zusätzlich können in vorteilhafter Weise auch Nitride wie Aluminiumnitrid oder Keramikmaterial auf die außenliegenden Außenflächen 13 der Statorringsegmente 10 aufgebracht werden.

Alternativ können anstelle des beschriebenen Kaltgasspritzens auch andere Beschichtungsverfahren eingesetzt werden, beispielsweise Flammspritzen, Hochgeschwindigkeitsflammspritzen, andere bekannte thermische Spritzverfahren für metallische Werkstoffe oder Auftragsschweißen; vorteilhaft ist es jedoch, wenn der thermische Eintrag beim Beschichten möglichst gering ist, weshalb Kaltgasspritzen als besonders geeignet angesehen wird.

Die Schichtdicke der Mantelschicht 21 liegt vorzugsweise in einem Bereich zwischen 3 und 8 mm nach dem Überdrehen.

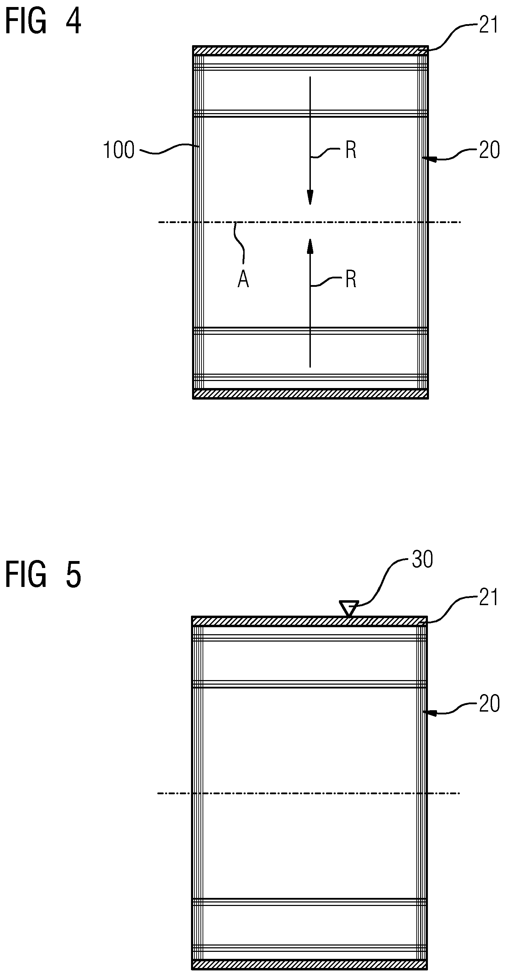

Die Figur 4 zeigt den mit der äußeren Mantelschicht 21 beschichteten Stator 20 in einem Längsschnitt entlang der axialen Richtung A. Es lässt sich erkennen, dass die Statorringsegmente 10 jeweils Statorringsegmentbleche 100 aufweisen, die in axialer Richtung A hintereinander angeordnet und vorzugsweise aufeinandergepresst sind. Die axiale Richtung A entspricht der Drehachse eines Rotors, der in den Stator 20 der elektrische Maschine eingesetzt ist.

Die äußere Mantelschicht 21 hält die Statorringsegmente 10 dabei unter einer radial nach innen wirkenden Vorspannung, wie im Zusammenhang mit der Figur 3 erläutert wurde.

Die Figur 5 zeigt den beschichteten Stator 20 während einer Nachbearbeitung mittels eines spanabhebenden Werkzeugs 30 einer nicht weiter dargestellten Drehmaschine. Mit der Drehmaschine bzw. dem spanabhebenden Werkzeug 30 wird der beschichtete Stator 20 überdreht, wobei der Durchmesser auf einen vorgegebenen Soll-Durchmesser gebracht und die Oberfläche der äußeren Mantelschicht 21 geglättet wird.

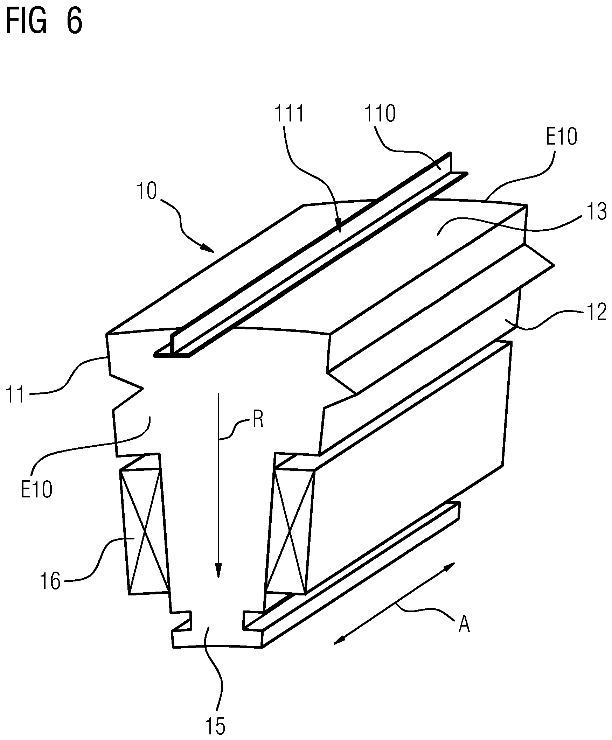

Die Figur 6 zeigt in einer dreidimensionalen Darstellung schräg von der Seite eine besonders bevorzugte Ausführungsvariante für ein Statorringsegment 10. Es lässt sich erkennen, dass auf der Außenfläche 13 eine Schiene 110 angebracht ist, bei der es sich beispielsweise, wie in der Figur 6 gezeigt, um eine biegesteife (bezogen auf die aufzubringende Presskraft) T-Schiene handeln kann. Abschnitte 111 der Schiene 110 sind bei dem Ausführungsbeispiel radial nach außen gerichtet.

Die Schiene 110 ragt in axialer Richtung A über die axialen Endabschnitte E10 des Statorringsegments 10 heraus und ermöglicht es, dort in besonders einfacher Weise eine Zug- oder Druckkraft in radialer Richtung R auf das Statorringsegment 10 auszuüben.

Eine Spule 16 ist auf den radial gesehen mittleren Bereich des Statorringsegments 10 aufgesteckt/aufgewickelt und befindet sich somit zwischen dem durch einen Polschuh gebildeten Formschlussabschnitt 15 und der Außenfläche 13.

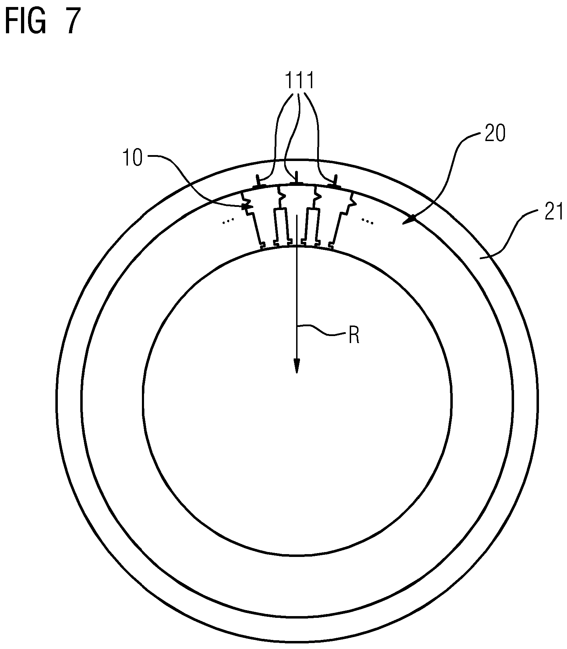

Die Figur 7 zeigt den einen mit einer äußeren Mantelschicht 21 beschichteten Stator 20, der aus Statorringsegmenten 10 gemäß Figur 6 zusammengesetzt worden ist. Die außen aufgebrachte äußere Mantelschicht 21 kann von ihrer Dicke derart bemessen sein, dass die Abschnitte 111 vollständig in die Mantelschicht 21 eingebettet sind, wie in Figur 7 gezeigt. Alternativ ist es auch möglich, dass die Abschnitte 111 radial herausragen.

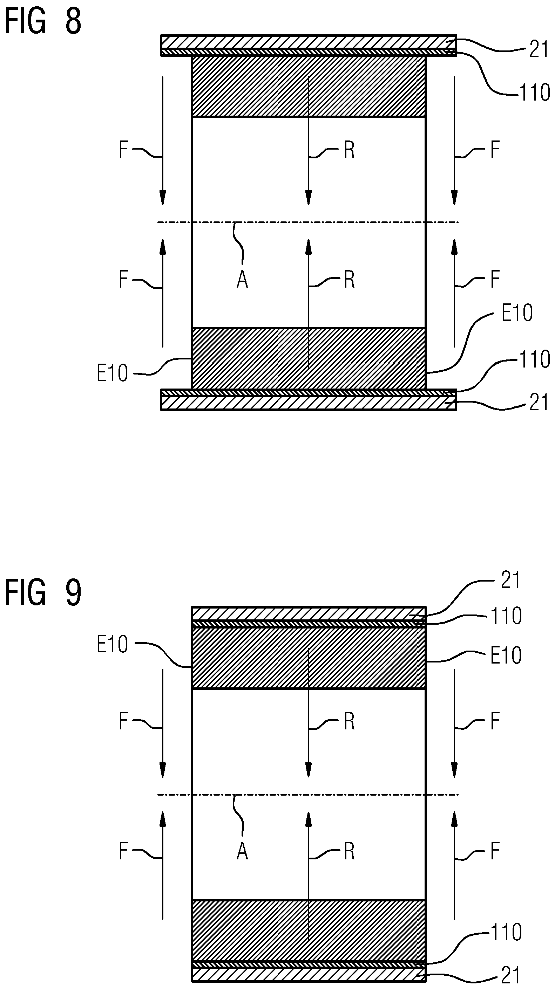

Die Figur 8 zeigt den mit der Mantelschicht 21 beschichteten Stator 20 gemäß Figur 7 in einem Längsschnitt. Es lässt sich erkennen, dass an den Enden E10 der Statorringsegmente 10 die Schienen 110 axial herausragen, wodurch dort eine Presskraft F in Form einer Zug- oder Druckkraft in radialer Richtung R besonders einfach ausgeübt werden kann.

Nach dem Aufbringen der äußeren Mantelschicht 21 können die über die axialen Enden E10 herausragenden Abschnitte der Schienen 110 gekürzt oder abgetrennt werden, wie beispielhaft in der Figur 9 gezeigt ist; in der Figur 9 wurden die überstehenden Schienenabschnitte abgeschnitten.

Die Figur 10 zeigt eine Ausführungsvariante des Ausführungsbeispiels gemäß Figur 6. Es lässt sich erkennen, dass zusätzlich oder alternativ zu der Schiene 110 auch ein als Zugelement arbeitendes Greifwerkzeug 40 eingesetzt werden kann, um eine radiale Zugkraft zu erzeugen. Das Greifwerkzeug 40 wirkt mit dem radial innenliegenden Formschlussabschnitt 15 des Statorringsegments 10 zusammen. Bei dem Formschlussabschnitt 15 kann es sich um eine Einschnürung handeln, wie in Figur 1 gezeigt, oder auch um einen Polschuh, wie in der Figur 10 gezeigt.

Zum Erzeugen der Presskraft F gemäß Figur 3 kann sowohl das Greifwerkzeug 40 wie in Figur 10 gezeigt als auch die in der Figur 10 gezeigte Schiene 110 herangezogen werden. Alternativ ist es möglich, nur eine der beiden Maßnahmen vorzusehen, also die Presskraft F gemäß Figur 3 ausschließlich über die in den Figur 6 und 10 gezeigte Schiene 110 oder ausschließlich mittels des Greifwerkzeugs 40 und den Formschlussabschnitt 15 zu erzeugen.

Die Figur 11 zeigt ein vorteilhaftes Verfahren zum Herstellen der Statorringsegmente 10, wie sie im Zusammenhang mit den Figuren 1 bis 10 beschrieben worden sind. Die Statorringsegmente 10 werden jeweils aus Statorringsegmentblechen 100 zusammengesetzt, die in axialer Richtung A mittels einer Presskraft F zusammengepresst werden.

Anschließend wird, wie in Figur 12 gezeigt, auf radial außenliegende Stirnflächen 101 der Statorringsegmentbleche 100 eine segmenteigene Schicht 102 aufgebracht, die eine radial außenliegende Segmentmantelschicht und damit die Außenfläche 13 des jeweiligen Statorringsegments 10 bildet. Im Rahmen des Beschichtens können zusätzlich auch die radial innenliegenden Stirnflächen der Statorringsegmentbleche 100 beschichtet werden, beispielsweise derart, dass die segmenteigene Schicht 102 das gesamte Statorringsegment 10 umhüllt.

Besonders vorteilhaft ist es, wenn das Aufbringen der segmenteigenen Schicht 102 mittels Kaltgasspritzen erfolgt, das in der Figur 12 durch Pfeile mit dem Bezugszeichen KGS schematisch angedeutet ist.

Beim Kaltgasspritzen wird als Pulvermaterial vorzugsweise Stahl verwendet, vorzugsweise der Spezifikation H13, M3, 304, 316L, 430L, A286, M152, S420 oder 8620. Alternativ oder zusätzlich können in vorteilhafter Weise auch Nitride wie Aluminiumnitrid oder Keramikmaterial aufgebracht werden.

Alternativ können anstelle des beschriebenen Kaltgasspritzens auch andere Beschichtungsverfahren eingesetzt werden, beispielsweise Flammspritzen, Hochgeschwindigkeitsflammspritzen, andere bekannte thermische Spritzverfahren für metallische Werkstoffe oder Auftragsschweißen; vorteilhaft ist es jedoch, wenn der thermische Eintrag beim Beschichten möglichst gering ist, weshalb Kaltgasspritzen als besonders geeignet angesehen wird.

Das Material und die Schichtdicke der segmenteigenen Schicht 102 ist vorzugsweise derart gewählt, dass nach dem Aufbringen der segmenteigenen Schicht 102 die Presskraft F nicht mehr von außen aufgebracht werden muss, sondern anschließend ganz oder zumindest zum überwiegenden Teil (vorzugsweise mindestens 50%) von der segmenteigenen Schicht 102 aufrechterhalten wird. Durch die segmenteigene Schicht 102 bleiben die Statorringsegmentbleche 100 somit in axialer Richtung A aufeinandergepresst.

Die Schichtdicke der segmenteigenen Schicht 102 liegt vorzugsweise in einem Bereich zwischen 1 und 3 mm.

Nach dem Beschichten kann mit einem spanabhebenden Werkzeug 30 einer Drehmaschine die Oberfläche der Segmentmantelschicht geglättet und der Durchmesser des Statorringsegments reduziert werden.

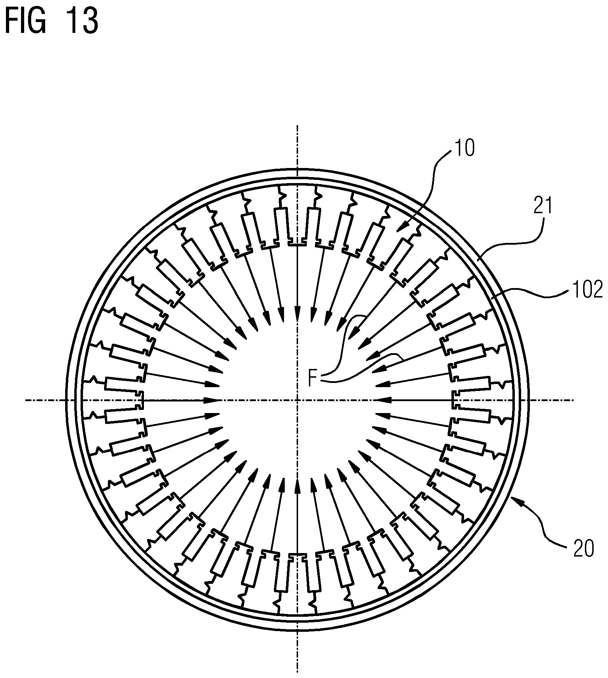

Die Figur 13 zeigt im Querschnitt einen Stator 20, der mit den Statorringsegmenten 10 gemäß Figur 12 gebildet worden ist. Es lässt sich erkennen, dass nach dem Zusammensetzen der Statorringsegmente 10 zum Statorring eine äußere Presskraft F erzeugt wird, wie dies im Zusammenhang mit der Figur 3 bereits erläutert worden ist. Anschließend wird auf die aufeinandergepressten Statorringsegmente 10 eine äußere Beschichtung aufgebracht, die auf dem Statorring eine geschlossene äußere Mantelschicht 21 bildet, wie dies im Zusammenhang mit der Figur 3 bereits erläutert worden ist.

Bei dem Ausführungsbeispiel gemäß Figur 13 befindet sich die äußere Mantelschicht 21 des beschichteten Stators 20 also auf der Segmentmantelschicht 102 der Statorringsegmente 10.

Die Segmentmantelschicht 102 der Statorringsegmente 10 dient dabei dazu, die Statorringsegmentbleche 100 in axialer Richtung aufeinandergepresst zu halten, wohingegen die Mantelschicht 21 auf dem beschichteten Stator 20 die Aufgabe hat, die Statorringsegmente 10 radial nach innen gepresst zu halten, damit die Kontaktflächen 11 und 12 der Statorringsegmente tangential aufeinandergepresst bleiben.

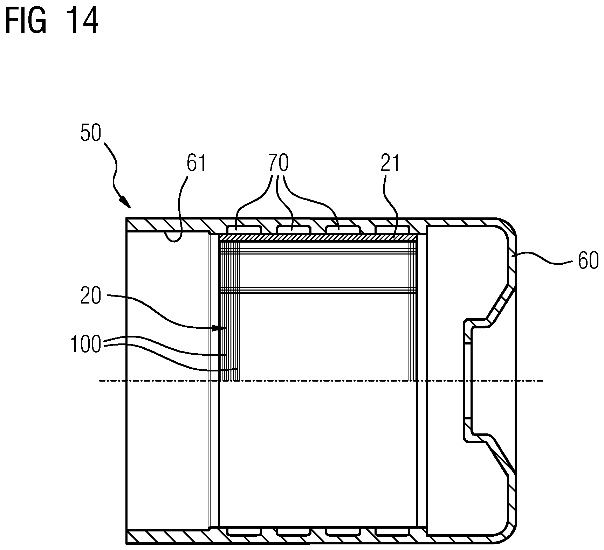

Die Figur 14 zeigt ein Ausführungsbeispiel für Bestandteile einer elektrischen Maschine 50, die mit einem beschichteten Stator 20, wie er oben im Detail im Zusammenhang mit den Figuren 1 bis 13 beschrieben worden ist, ausgestattet ist. Es lässt sich erkennen, dass der beschichtete Stator 20 in ein Gehäuse 60 der elektrischen Maschine 50 eingeschrumpft ist.

Besonders vorteilhaft ist es, wenn die Innenwandseite 61 des Gehäuses 60 mit Nuten versehen ist, die gemeinsam mit der äußeren Mantelschicht 21 des beschichteten Stators 20 Kühlkanäle 70 bilden, die einen Kühlmitteldurchfluss zum Kühlen des Stators 20 ermöglichen. Die Nuten zur Kühlmittelführung können beispielsweise in Umfangsrichtung, spiralförmig, axial und/oder mäandernd im Gehäuse verlaufen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Statorringsegment
- 11: Kontaktfläche
- 12: Kontaktfläche
- 13: radial außenliegende Außenfläche
- 14: radial innenliegender Bereich
- 15: Formschlussabschnitt
- 16: Spule
- 20: Statorring / Stator
- 21: Mantelschicht
- 30: spanabhebendes Werkzeug
- 40: Greifwerkzeug
- 50: elektrische Maschine
- 60: Gehäuse
- 61: Innenwandseite
- 70: Kühlkanal
- 100: Statorringsegmentblech
- 101: radial außenliegende Stirnfläche
- 102: segmenteigene Schicht
- 110: Schiene
- 111: Abschnitt

- A: axiale Richtung
- E10: axialer Endabschnitt
- F: Presskraft
- KGS: Pfeil (Kaltgasspritzen)
- R: radiale Richtung

## Patentansprüche

1. Verfahren zum Herstellen einer elektrischen Maschine (50), bei dem unter anderem Statorringsegmente (10) unter Bildung eines Statorrings (20) aneinandergesetzt und anschließend miteinander verbunden werden, wobei
- nach dem Bilden des Statorrings (20) mittels einer Presseinrichtung eine radial nach innen wirkende Presskraft (F) erzeugt wird, durch die die Statorringsegmente (10) tangential aufeinandergepresst werden,
**dadurch gekennzeichnet, dass**
- im aufeinandergepressten Zustand auf radial außenliegende Außenflächen (13) der Statorringsegmente (10) eine äußere Beschichtung aufgebracht wird, die auf dem Statorring (20) eine geschlossene äußere Mantelschicht (21) bildet,
- nach dem Aufbringen der äußeren Beschichtung das Erzeugen der Presskraft (F) mittels der Presseinrichtung beendet wird und
- die während des Beschichtens mittels der Presseinrichtung erzeugte Presskraft (F) anschließend ganz oder zumindest zum überwiegenden Teil von der äußeren Mantelschicht (21) aufrechterhalten wird und die Statorringsegmente (10) durch die geschlossene äußere Mantelschicht (21) tangential aufeinandergepresst bleiben,
- wobei die äußere Beschichtung durch Kaltgasspritzen, Flammspritzen, ein thermisches Spritzverfahren für metallische Werkstoffe oder durch Auftragsschweißen hergestellt wird.

2. Verfahren nach Anspruch 1,
**dadurch gekennzeichnet, dass**
nach dem Aufbringen der äußeren Beschichtung der beschichtete Statorring (20) mittels einer Drehmaschine überdreht wird, wobei der Durchmesser des beschichteten Statorrings (20) auf einen vorgegebenen Solldurchmesser gebracht und/oder die Oberfläche der äußeren Beschichtung geglättet wird.

3. Verfahren nach einem der voranstehenden Ansprüche,
**dadurch gekennzeichnet, dass**
der beschichtete Statorring (20) in ein Gehäuse (60) der Maschine (50) eingeschrumpft wird und dabei die äußere Beschichtung des beschichteten Statorrings (20) an die Innenwand (61) des Gehäuses (60) gepresst wird.

4. Verfahren nach einem der voranstehenden Ansprüche,
**dadurch gekennzeichnet, dass**
- in zumindest eines der Statorringsegmente (10), vorzugsweise in alle Statorringsegmente (10), jeweils eine Hilfseinrichtung integriert wird, und
- mit der Presseinrichtung auf die Hilfseinrichtungen jeweils eine Druck- oder Zugkraft in radialer Richtung ausgeübt wird, die die Presskraft (F) bildet oder zumindest zu dieser beiträgt.

5. Verfahren nach einem der voranstehenden Ansprüche,
**dadurch gekennzeichnet, dass**
- zumindest eine der Hilfseinrichtungen eine Schiene (110) ist, die sich in axialer Richtung entlang ihres zugeordneten Statorringsegment (10) erstreckt und an den axialen Enden (E10) ihres Statorringsegments (10) mit axialen Endabschnitten herausragt bzw. übersteht und
- mit der Presseinrichtung eine Druck- oder Zugkraft in radialer Richtung auf die axial überstehenden Endabschnitte ausgeübt wird, die die Presskraft (F) bildet oder zumindest zu dieser beiträgt.

6. Verfahren nach einem der voranstehenden Ansprüche,
**dadurch gekennzeichnet, dass**
- zumindest eines der Statorringsegmente (10), vorzugsweise alle Statorringsegmente (10), jeweils ein radial innenliegendes Formschlusselement (15) aufweisen
- an das oder die Formschlusselemente (15) jeweils ein Zugelement, insbesondere in Form eines Greifwerkzeugs (40), angebracht wird und
- mit der Presseinrichtung auf die Formschlusselemente (15) eine Zugkraft radial nach innen ausgeübt wird, die die Presskraft (F) bildet oder zumindest zu dieser beiträgt.

7. Verfahren nach einem der voranstehenden Ansprüche,
**dadurch gekennzeichnet, dass**
- zur Herstellung zumindest eines der, vorzugsweise jedes der, Statorringsegmente (10) eine Vielzahl an Statorringsegmentblechen (100) aufeinandergelegt und zusammengepresst wird,
- radial außenliegende Stirnflächen (101) der zusammengepressten Statorringsegmentbleche (100) mit einer segmenteigenen Schicht (102) beschichtet werden, die eine radial außenliegende Segmentmantelschicht (102) des jeweiligen Statorringsegments (10) bildet, und
- mit dem oder den beschichteten Statorringsegmenten (10) der Statorring (20) gebildet wird.

8. Verfahren nach Anspruch 7,
**dadurch gekennzeichnet, dass**
- das Zusammenpressen der Statorringsegmentbleche (100) nach dem Aufbringen der segmenteigenen Segmentmantelschicht (102) beendet wird und
- die segmenteigene Segmentmantelschicht (102) die mechanische Kraft, die während des Aufbringens der segmenteigenen Segmentmantelschicht (102) zum Zusammenpressen der Statorringsegmentbleche (100) ausgeübt wurde, anschließend ganz oder zumindest zum überwiegenden Teil aufrechterhält.

9. Verfahren nach einem der voranstehenden Ansprüche,
**dadurch gekennzeichnet, dass**
die segmenteigenen Segmentmantelschichten (102) der Statorringsegmente (10) durch Kaltgasspritzen, Flammspritzen, ein thermisches Spritzverfahren für metallische Werkstoffe und/oder Auftragsschweißen hergestellt werden.

10. Verfahren nach einem der voranstehenden Ansprüche,
**dadurch gekennzeichnet, dass**
nach dem Zusammensetzen der beschichteten Statorringsegmente (10) die äußere Beschichtung auf den segmenteigenen Segmentmantelschichten (102) der Statorringsegmente (10) aufgebracht wird und die geschlossene äußere Mantelschicht (21) des Statorrings (20) auf den segmenteigenen Segmentmantelschichten (102) der Statorringsegmente (10) aufliegt.

11. Elektrische Maschine (50) mit Statorringsegmenten (10), die unter Bildung eines Statorrings (20) aneinandergesetzt und miteinander verbunden sind,
**dadurch gekennzeichnet, dass**
die Statorringsegmente (10) tangential aufeinandergepresst sind, nämlich durch eine auf die Außenflächen (13) der Statorringsegmente (10) durch Kaltgasspritzen, Flammspritzen, ein thermisches Spritzverfahren für metallische Werkstoffe oder durch Auftragsschweißen aufgebrachte äußere Beschichtung, die auf dem Statorring (20) eine geschlossene äußere Mantelschicht (21) bildet.

12. Elektrische Maschine (50) nach Anspruch 11,
**dadurch gekennzeichnet, dass**
- die Statorringsegmente (10) jeweils eine Vielzahl an aufeinander gepressten Statorringsegmentblechen (100) aufweisen, die auf ihren radial außenliegenden Stirnflächen (101) mit einer segmenteigenen Segmentmantelschicht (102) beschichtet sind, und
- die geschlossene äußere Mantelschicht (21) des Statorrings (20) auf den segmenteigenen Segmentmantelschichten (102) der Statorringsegmente (10) aufliegt.

13. Elektrische Maschine (50) nach Anspruch 12,
**dadurch gekennzeichnet, dass**
die segmenteigenen Segmentmantelschichten (102) jeweils - bezogen auf die Drehachse der Maschine (50) - in axialer Richtung (A) eine mechanische Kraft aufrechterhalten.

## Claims

1. Method for manufacturing an electric machine (50), in which stator ring segments (10) are inter alia put together by forming a stator ring (20) and then connected to one another,
wherein
- after forming the stator ring (20), a pressing device is used to generate a pressing force (F) which acts radially inwards, by means of which the stator ring segments (10) are pressed together tangentially,
**characterised in that**
- in the pressed-together state an outer coating is applied to radially outer-lying external surfaces (13) of the stator ring segments (10) and forms a closed outer casing layer (21) on the stator ring (20),
- after applying the outer coating, the generation of the pressing force (F) is terminated by means of the pressing device and
- the pressing force (F) generated by means of the pressing device during the coating process is then wholly or at least largely maintained by the outer casing layer (21) and the stator ring segments (10) remain tangentially pressed together by means of the closed outer casing layer (21),
- wherein the outer coating is manufactured by means of cold gas spraying, flame spraying, a thermal spraying method for metallic materials or by means of build-up welding.

2. Method according to claim 1,
**characterised in that**
after applying the outer layer, the coated stator ring (20) is overwinded by means of a rotary machine,
wherein the diameter of the coated stator ring (20) is brought to a predetermined target diameter and/or the surface of the outer coating is smoothed.

3. Method according to one of the preceding claims,
**characterised in that**
the coated stator ring (20) is shrink-wrapped into a housing (60) of the machine (50) and in the process the outer coating of the coated stator ring (20) is pressed onto the inner wall (61) of the housing (60).

4. Method according to one of the preceding claims,
**characterised in that**
- an auxiliary device is integrated into at least one of the stator ring segments (10), preferably in all stator ring segments (10) in each case, and
- a pressing device is used to exert in each case a compressive or tensile force onto the auxiliary devices in the radial direction, said force forming the pressing force (F) or at least contributing to the same.

5. Method according to one of the preceding claims,
**characterised in that**
- at least one of the auxiliary devices is a rail (110), which extends in the axial direction along its assigned stator ring segment (10) and projects or protrudes at the axial ends (E10) of its stator ring segment (10) with axial end sections and
- the pressing device is used to exert a compressive or tensile force onto the axially protruding end segments in the radial direction, said force forming the pressing force (F) or at least contributing to the same.

6. Method according to one of the preceding claims,
**characterised in that**
- at least one of the stator ring segments (10), preferably all stator ring segments (10), have in each case a radially inner-lying form-fit element (15)
- a traction element, in particular in the form of a gripper tool (40), is attached to the form-fit element or elements (15) in each case and
- a compressive force is exerted radially inwards on the form-fit elements (15) with the pressing device and forms the pressing force (F) or at least contributes to the same.

7. Method according to one of the preceding claims,
**characterised in that**
- in order to establish at least one, preferably each, of the stator ring segments (10), a plurality of stator ring segment sheets (100) is placed one on top of the other and pressed together,
- radially outer-lying front faces (101) of the pressed-together stator ring segment sheets (100) are coated with a segment-individual layer (102), which forms a radially outer-lying segment casing layer (102) of the respective stator ring segment (10), and
- the stator ring (20) is formed with the coated stator ring segment or segments (10).

8. Method according to claim 7,
**characterised in that**
- the pressing-together of the stator ring segment sheets (100) is terminated after applying the segment-individual segment casing layer (102) and
- the segment-individual segment casing layer (102) then wholly or at least largely maintains the mechanical force which has been exerted during the application of the segment-individual segment casing layer (102) in order to press together the stator ring segment sheets (100).

9. Method according to one of the preceding claims,
**characterised in that**
the segment-individual segment casing layers (102) of the stator ring segments (10) are manufactured by means of cold gas spraying, flame spraying, a thermal spraying method for metallic materials and/or build-up welding.

10. Method according to one of the preceding claims,
**characterised in that**
after assembling the coated stator ring segments (10), the outer coating is applied to the segment-individual segment casing layers (102) of the stator ring segments (10) and the closed outer casing layer (21) of the stator ring (20) rests on the segment-individual segment casing layers (102) of the stator ring segments (10).

11. Electric machine (50) with stator ring segments (10), which by forming a stator ring (20) are put together and connected to one another,
**characterised in that**
the stator ring segments (10) are pressed together tangentially, namely by means of an outer coating applied to the outer surfaces (13) of the stator ring segments (10) by means of cold gas spraying, flame spraying, a thermal spraying method for metallic materials or by means of build-up welding, said coating forming a closed outer casing layer (21) on the stator ring (20).

12. Electric machine (50) according to claim 11,
**characterised in that**
- the stator ring segments (10) each have a plurality of stator ring segment sheets (100) pressed onto one another, which are coated on their radially outer-lying front faces (101) with a segment-individual segment casing layer (102), and
- the closed outer casing layer (21) of the stator ring (20) rests on the segment-individual segment casing layers (102) of the stator ring segments (10).

13. Electric machine (50) according to claim 12,
**characterised in that**
the segment-individual segment casing layers (102) each maintain a mechanical force in the axial direction (A) with respect to the axis of rotation of the machine (50).

## Revendications

1. Procédé de fabrication d'une machine (50) électrique, dans lequel on met entre autre les uns à côté des autres des segments (10) d'anneau statorique avec formation d'un anneau (20) statorique et ensuite on les assemble entre eux,
dans lequel
- après la formation de l'anneau (20) statorique, on produit au moyen d'un dispositif de presse une force (F) de presse agissant vers l'intérieur radialement, par laquelle les segments (10) d'anneau statorique sont pressés les uns sur les autres tangentiellement,
**caractérisé en ce que**
- dans l'état pressé les uns sur les autres, on dépose sur des surfaces (13) extérieures se trouvant à l'extérieur radialement des segments (10) d'anneau statorique, un revêtement extérieur, qui forme sur l'anneau (20) statorique une couche (21) d'enveloppe extérieure sans fin,
- après le dépôt du revêtement extérieur on met fin à la production de la force (F) de pression au moyen du dispositif de pression et
- on maintient ensuite sur toute ou du moins sur la partie prépondérante de la couche (21) d'enveloppe extérieure, la force (F) de pression produite pendant le revêtement au moyen du dispositif de presse et on laisse les segments (10) d'anneau statorique pressés les uns sur les autres tangentiellement par la couche (21) d'enveloppe extérieure sans fin,
- dans lequel on produit le revêtement extérieur par pulvérisation au gaz froid, pulvérisation à la flamme, un procédé de pulvérisation thermique pour des matériaux métalliques ou par soudage avec rechargement.

2. Procédé suivant la revendication 1,
**caractérisé en ce que**,
après le dépôt du revêtement extérieur on fait tourner l'anneau (20) statorique revêtu au moyen d'une machine de rotation, dans lequel on met le diamètre de l'anneau (20) statorique revêtu à un diamètre de consigne donné à l'avance et/ou on lisse la surface du revêtement extérieur.

3. Procédé suivant l'une des revendications précédentes,
**caractérisé en ce que** l'
on rétreint l'anneau (20) statorique revêtu dans une enveloppe (60) de la machine (50) et on presse ainsi le revêtement extérieur de l'anneau (20) statorique revêtu sur la paroi (61) intérieure de l'enveloppe (60).

4. Procédé suivant l'une des revendications précédentes,
**caractérisé en ce que**
- dans au moins l'un des segments (10) de l'anneau statorique, de préférence dans tous les segments (10) de l'anneau statorique, on intègre respectivement un dispositif auxiliaire, et
- par le dispositif de presse, on applique sur les dispositifs auxiliaires respectivement une force de pression ou de traction dans la direction radiale, qui forme la force (F) de pression ou du moins y contribue.

5. Procédé suivant l'une des revendications précédentes,
**caractérisé en ce que**,
- au moins l'un des dispositifs auxiliaires est un rail (110), qui s'étend dans la direction axiale le long de son segment (10) d'anneau statorique associé et qui sort ou qui dépasse aux extrémités (E10) axiales de son segment (10) d'anneau statorique par des parties d'extrémité axiales et
- par le dispositif de presse on applique une force de pression ou de traction dans la direction radiale aux parties d'extrémité en saillie axialement, qui forme la force (F) de pression ou du moins y contribue.

6. Procédé suivant l'une des revendications précédentes,
**caractérisé en ce que**,
- au moins l'un des segments (10) de l'anneau statorique, de préférence tous les segments (10) de l'anneau statorique ont respectivement un élément (15) à complémentarité de forme se trouvant à l'intérieur radialement
- sur le ou les éléments (15) à complémentarité de forme on monte respectivement un élément de traction, en particulier sous la forme d'un outil (40) de prise et
- par le dispositif de presse on applique aux éléments (15) à complémentarité de forme une force de traction radialement vers l'intérieur, qui forme la force (F) de presse ou du moins y contribue.

7. Procédé suivant l'une des revendications précédentes,
**caractérisé en ce que**
- pour la production d'au moins l'un, de préférence de chacun des segments (10) de l'anneau statorique, on met les uns sur les autres et on presse ensemble une pluralité de tôles (100) de segments d'anneau statorique,
- on revêt des surfaces (101) frontales se trouvant à l'extérieur radialement des tôles (100) de segments d'anneau statorique pressées ensemble d'une couche (102) propre aux segments, qui forme une couche (102) d'enveloppe de segment se trouvant vers l'extérieur radialement du segment (10) d'anneau statorique, et
- on forme l'anneau (20) statorique par le ou les segments (10) d'anneau statorique revêtus.

8. Procédé suivant la revendication 7,
**caractérisé en ce que** l'
- on cesse de presser ensemble les tôles (100) de segments d'anneau statorique après le dépôt de la couche (102) d'enveloppe de segment propre au segment et
- la couche (102) d'enveloppe de segment propre au segment maintient ensuite entièrement ou du moins pour une partie prépondérante la force mécanique, qui a été appliquée pendant le dépôt de la couche (102) d'enveloppe de segment propre au segment pour presser ensemble les tôles (100) de segments d'anneau statorique.

9. Procédé suivant l'une des revendications précédentes,
**caractérisé en ce que** l'
on produit les couches (102) d'enveloppe de segment, propres au segment, des segments (10) d'anneau statorique par pulvérisation au gaz froid, pulvérisation à la flamme, un procédé de pulvérisation thermique pour des matériaux métalliques et/ou par un soudage avec rechargement.

10. Procédé suivant l'une des revendications précédentes,
**caractérisé en ce que**,
après avoir réuni les segments (10) d'anneau statorique revêtus, on dépose le revêtement extérieur sur les couches (102) d'enveloppe de segment, propres au segment, des segments (10) de l'anneau statorique et la couche (21) d'enveloppe extérieure sans fin de l'anneau (20) statorique s'applique aux couches (102) d'enveloppe de segment, propres au segment, des segments (10) de l'anneau statorique.

11. Machine (50) électrique comprenant des segments (10) d'anneau statorique, qui sont mis les uns à côté des autres avec formation d'un anneau (20) statorique et sont assemblés ensemble,
**caractérisée en ce que**
les segments (10) de l'anneau statorique sont pressés les uns sur les autres tangentiellement, à savoir par un revêtement extérieur, qui est posé sur les surfaces (13) extérieures des segments (10) d'anneau statorique par pulvérisation au gaz froid, pulvérisation à la flamme, un procédé de pulvérisation thermique pour des matériaux métalliques ou par soudage avec rechargement, et qui forme une couche (21) d'enveloppe extérieure sans fin sur l'anneau (20) statorique.

12. Machine (50) électrique suivant la revendication 11,
**caractérisée en ce que**
- les segments (10) d'anneau statorique ont chacun une pluralité de tôles (100) de segment d'anneau statorique pressées les unes sur les autres, qui sont, sur leurs surfaces (101) frontales se trouvant vers l'extérieur radialement, revêtues d'une couche (102) d'enveloppe de segment propre au segment, et
- la couche (21) d'enveloppe extérieure sans fin de l'anneau (20) statorique s'applique aux couches (102) d'enveloppe de segment propres au segment, des segments (10) de l'anneau statorique.

13. Machine (50) électrique suivant la revendication 12,
**caractérisée en ce que**
les couches (102) d'enveloppe de segment propres au segment maintiennent une force mécanique dans la direction (A) axiale respectivement - rapportée à l'axe de rotation de la machine (50).
